# EUROPEAN PATENT APPLICATION

(11) **EP 0 864 931 A1**
(43) Date of publication of application: **16.09.1998**
(21) Application number: 97301574.6
(22) Date of filing: 10.03.1997
(51) Int. Cl.: G03G 15/00, H04N 1/407

(54) **A reflectometer and method for monitoring the density of printed material**

(71) Applicant: XEIKON NV, B-2640 Mortsel (BE)
(72) Inventor: Verhaert,Dirk, 2440 Geel (BE); Roosen,Jan Paul Annie, 3001 Heverlee (BE); Bollansee,Erik Marcel Lieva, 2140 Borgerhout (BE)
(74) Representative: Gambell, Derek

(57) **Abstract**

The reflectometer includes an assembly of LEDs (12b, 12r, 12g) capable, when activated, of emitting light of different wavelength bands and a detector (14) positioned in a fixed relationship to the assembly to receive light from the LEDs reflected by a control patch (36) is printed on a substrate (28) moving through the printer (26). Control means (34) selectively activate one or more of the light emitting diodes (12b, 12r, 12g). The control patch (36) is illuminated with light of a complimentary colour to the colour of the control patch (36). The monitoring of optical print quality of printed material is achieved in a convenient manner "on-line", even while the printed material is moving.

## Description

### Field of the invention

The present invention relates to a device for monitoring the print quality of toner printed material output from a multi-colour printer, and to a method for monitoring the print quality of such printed material.

### Background to the invention

In the operation of a printer, especially a multi-colour printer, it is important that the print quality of the printed material, for example the optical density of the printed image, corresponds closely to an expected level. The printed image may be in the form of flat printed areas, patterns, text and/or line images. This monitoring of print quality is particularly important where different colours overlap in the printed image, since a fall off in the density of one colour can seriously affect the accuracy of colour reproduction. In long print runs, the print density of one or more colours, and therefore the colour balance of the image, can change with time due to a number of factors. It is therefore desirable to measure the optical density of the printed material from time to time in order to alert the operator to such errors.

A densitometer is known for measuring the density of printed material, comprising a light source and a detector positioned in a fixed relationship to the light source to receive light from the light source reflected by a sample of printed material. A control patch is printed on a substrate moving through the printer. The printed material output including the control patch is then removed from the printer and placed adjacent a densitometer. The control patch is illuminated with light from the light source and the detector is used to measure the light reflected by the control patch. Any deviation of the measured density from an expected value for that control patch is an indication of error.

Where the printer is a multi-colour printer, the known device uses a light source of white light and one or more filters are selectively interposed in front of the detector thereby to ensure that only light of a given wavelength band corresponding to the colour of the control patch reaches the detector. Complicated optics are required to ensure that the printed material is illuminated with parallel light and that the intensity of reflected light reaching the detector is not a function of the distance between the detector and the printed material.

Not only is this method inconvenient in having to remove a sample of printed material from the printer and to interpose a selected filter, the light output of most white light sources is unpredictable over time, both in terms of power and wavelength distribution. The results obtained by this method are not therefore highly reliable. Furthermore, the known device requires moving parts to enable filters to be changed, or the use of a number of separate detectors. Filters reduce the light reflectivity reaching the detectors, resulting in the need for higher exposure times or more sensitive detectors than would otherwise be the case.

### OBJECTS OF THE INVENTION

It is an object of the present invention to provide a device and method for monitoring the optical print quality of printed material in a convenient manner which enables the disadvantages of the known devices to be avoided. It is a preferred object of the invention to provide such a device and method which enables monitoring to be carried out "on-line", that is without removing a sample of printed material from the printer, even while the printed material is moving.

### SUMMARY OF THE INVENTION

We have discovered that these objectives and other useful benefits can be achieved where the light source comprises an assembly of light emitting diodes capable, when activated, of emitting light of different wavelength bands, and control means are provided for selectively activating one or more of the light emitting diodes.

Thus, according to a first aspect of the invention, there is provided a reflectometer for monitoring the print quality of printed material, comprising a light source and a detector positioned in a fixed relationship to the light source to receive light from the light source reflected by the image on a sample of printed material, **characterised in that** the light source comprises an assembly of light emitting diodes capable, when activated, of emitting light of different wavelength bands, and control means for selectively activating one or more of the light emitting diodes.

Light emitting diodes (LEDs) are readily available, have a short warm-up time, have a longer life and are more reliable in terms of energy and wavelength band output than conventional white light sources. By using light sources of a given wavelength band output, the need for filters is avoided. LEDs are also very low in cost, with the result that the reflectometer according to the invention can be manufactured for a cost which is orders of magnitude cheaper than conventional densitometers.

The assembly may comprise at least three LEDs with different output wavelength bands. For example, the assembly comprises at least one blue LED, at least one red LED and at least one green LED. Further LEDs may be present. These may have output wavelengths bands different from the first three LEDs, but little advantage is gained thereby. However, a further LED with an output wavelength band similar to one of the first three LEDs may be advantageous, where the detector is less sensitive to that wavelength band.

The reflectometer may be used in combination with a multi-colour printer, and may further include means for controlling the printer in response to the output of the detector. Means may be provided for activating at least one of the LEDs in response to the colour(s) of a control patch printed by the printer. Electronic circuitry can be provided in a manner known per se to switch the appropriate LEDs on and off as required. Preferably, the printer is a digital printer, such as that described in United States patent US 5455668 (De Bock et al. assigned to Xeikon NV).

In one embodiment, the LEDs and the detector are mounted in a common housing. The mounting of the LED assembly and the detector in a common housing has the advantage that the angle of incidence of light from the LEDs on the printed material lying in the measurement plane, remains constant. This angle is preferably close to 45°, such as from 40° to 50°. The angle of reflection of light from the printed material lying in the measurement plane to the detector is preferably about 90°, such as from 80° to 100°. The housing preferably defines an aperture, behind which the LEDs and the detector are positioned. The smaller the size of the aperture, the smaller need be the size of the control patches or the higher may be the number of readings which can be taken on a given patch. A smaller aperture, however, requires LEDs of higher output energy, multiple LEDs per wavelength band or a detector of higher sensitivity. As a consequence, smaller test pages can be generated which results in less waste. Also continuous measurements become more cost efficient.

Since no optics are used, the light intensity detected by the detector depends not only upon the density of the printed material but also on the distance thereof from the detector. It is therefore important to position the detector at a fixed distance from the printed material. The reflectometer may therefore further comprise means to define a measuring plane in a fixed position relative to the LEDs and the detector. Where the LEDs and the detector are mounted in a common housing, the housing may have surface portions defining the measuring plane. During measurement, these surface portions lie against the printed material, thereby ensuring that the distance between the printed material and the detector remains constant. The surface portions are preferably formed of a low friction material. This enables the monitoring to be carried out while the printed material is moving relative to the reflectometer, without causing damage to the printed material. In an alternative embodiment, the housing of the device includes a roller in rolling contact with the substrate close to the measuring position to ensure that the LEDs and the detector remain at a fixed distance from the printed material. While it is possible to construct the reflectometer to move in synchronism with the printed material, this requires a more complicated construction and control system and is therefore less preferred.

A positioning device may be provided for moving the LEDs and the detector selectively into a measuring position adjacent the sample, and a non-measuring position away from the sample. In this manner, contact between the printed material and the reflectometer need only occur when monitoring is taking place. In one embodiment, the positioning device comprise a clamp device having a closed position corresponding to the measuring position and an open position corresponding to the non-measuring position. One arm of the clamp device carries the reflectometer, while the other arm carries a backing plate, which is also preferably coated with a low-friction material. Where the printer is a "duplex" printer, that is a printer which forms images on both faces of the substrate, especially such a printer which uses different sets of print engines for each face, it may be desirable to monitor the reflectivity of images on both faces of the substrate, preferably at the same time, but at locations spaced from one another. Two reflectometers are required in this case. While one reflectometer can act as the backing plate for the other reflectometer, more reliable results are obtained by staggering the two reflectometers. Nevertheless, both reflectometers can be mounted on a common clamp device.

The invention also provides a method for monitoring the print quality of printed material output from a multi-colour printer, comprising the steps of:
(1) printing a control patch on a substrate moving through the printer;
(2) subsequently placing printed material output including the control patch adjacent a reflectometer comprising a light source and a detector;
(3) illuminating the control patch with light from the light source and using the detector to measure the light reflected by the control patch;
   **characterised in that** the control patch is illuminated with light of a complimentary colour to the colour of the control patch from one or more light emitting diodes located in a fixed position relative to the detector.

The most accurate monitoring measurements can be made by printing colour patches each of a single colour. That is, where the printer uses toner powders or inks of three or more different colours, the control patch preferably is printed using only one of these colours at a time. The control patch is then illuminated with an LED of the complimentary colour. A blue LED is used to illuminate a yellow control patch, a red LED is used to illuminate a cyan control patch, and a green LED is used to illuminate a magenta control patch. Any LED colour can be used to illuminate a black control patch.

The printed material output including the control patch may be constrained to a measuring plane while light reflected from the control patch is detected. The method may further comprise the step of processing the output of the detector to generate a reflectivity reading for the control patch, and causing the printer to be adjusted when the reflectivity reading falls outside a predetermined tolerance range. This is particularly convenient when the printer is a digital printer. The print quality of the printed material can be adjusted in the printer in a number of ways. For example, where the printer uses exposure of a photoconductive surface to generate an initial latent image, the exposure level can be adjusted. Where toner powder is used to render a latent image visible, the concentration of toner in this powder can be adjusted. Furthermore, the development conditions which determine how much toner powder is deposited on the latent image can also be adjusted.

The reflectivity reading is generated, for example, by processing the output of the detector at a plurality of locations on each control patch. By taking measurements from a number of locations on each control patch and averaging the results, a more accurate indication of the performance of the printer is achieved. By processing the output of the detector at a number of locations on an un-printed area of the substrate, with each of the LEDs activated in turn (a so-called "blank" patch), the colour of the substrate can be taken into account in a known manner. Furthermore, by processing the output of the detector when the LEDs are switched off, (a so-called "black" patch), the sensitivity limits of the detector may be determined.

While we refer herein to generating a reflectivity reading, as a means of monitoring print density in order to control optical density over long runs, it is not of course essential to generate a reading of absolute density. What is important is to be alerted to changes in reflectivity, indicative of changes in print density given that the initial set-up of the printer is considered to be satisfactory. If however a reading of absolute density is required, a linearity calibration of the device is required.

Other applications in which a reflectometer according to the invention may be used include the measurement of the skew and focus of writing heads in the print stations and the cross density variations in toner development units at the printing stations.

In order to ensure that the detector is positioned correctly to make the required measurements, a calibration of its position relative to the edge of the substrate is recommended. Means are therefore preferably provided for lateral movement of the device. This can be particularly beneficial, if the printer includes a web alignment control system in which variations in web alignment are detected and compensated for by lateral adjustment of the image forming system, or where the printer is to be used for a number of different types of output in which control patches are located in different lateral positions. The means for enabling lateral movement of the device may enable the device to be "parked" in a covered zone away from the web, to facilitate web handling.

Where the printer includes a fixing device for permanently adhering the toner image to the substrate, it will be usual to position the reflectometer downstream of the fixing device, since the latter can have an effect upon the appearance of the toner image.

The invention will now be described in further detail, purely by way of example, with reference to the accompanying drawings, in which:

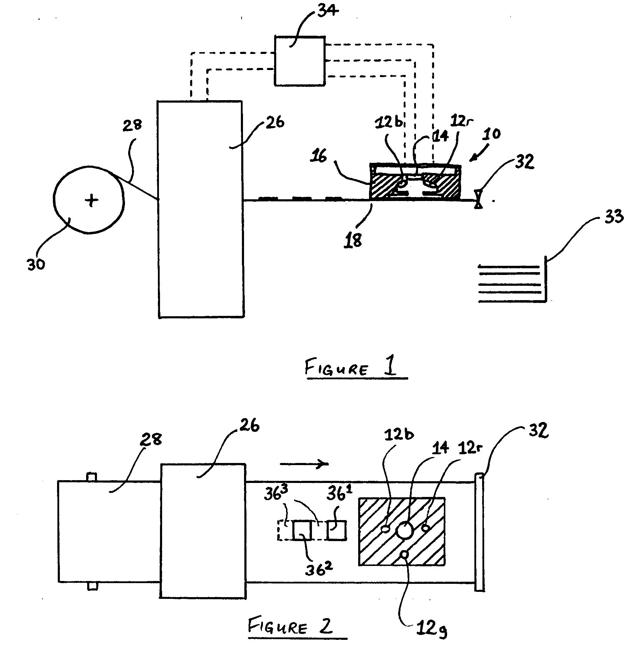

Figure 1 is a schematic illustration taken from one side of a reflectometer according to the invention, associated with a digital printer;
Figure 2 shows a view taken from above and illustrating a number of control patches on the printed material leaving the printer shown in Figure 1;

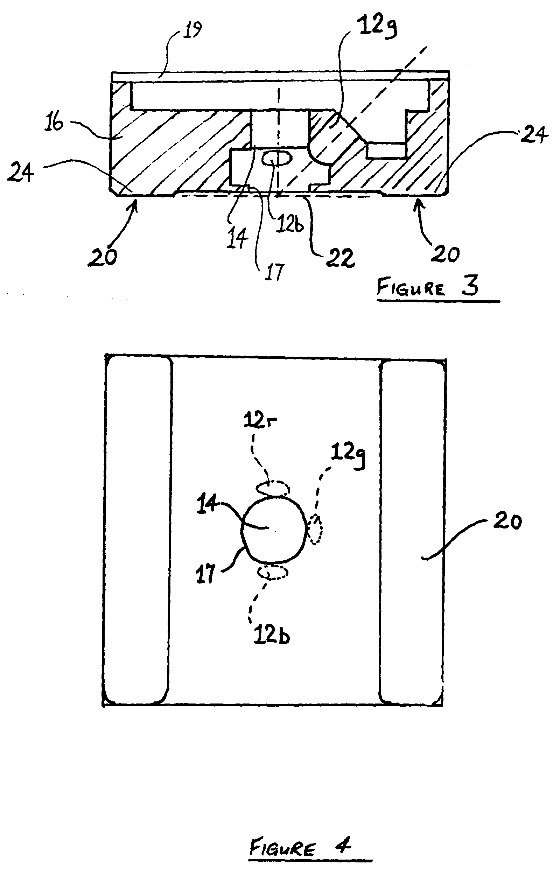

Figure 3 shows a detailed cross section through the reflectometer illustrated in Figures 1 and 2;
Figure 4 shows a view of the reflectometer shown in Figure 3, taken from below;
Figure 5 illustrates a clamping device including the reflectometer shown in Figures 3 and 4, in the open position;
Figure 6 is similar to Figure 5, showing the clamping device in its closed position; and
Figure 7 shows an alternative embodiment of a reflectometer according to the invention.

Referring to the drawings, there is shown a reflectometer 10 for monitoring the print quality of printed material. The reflectometer 10 comprises a light source which includes an assembly of three light emitting diodes (LEDs) 12b, 12r, 12g with different output wavelength bands, namely a blue LED 12b, a red LED 12r and a green LED 12g. Suitable LEDs are available from SLOAN Precision Optoelectronics, Sloan AG, Basel, Switzerland.

The LED assembly and a detector 14 are mounted in a common housing 16, having a circular aperture 17 of 2 to 3 mm diameter in its lower face. Such an aperture size is suitable for a web speed of about 120 mm/sec, even up to 240 mm/sec. The detector 14 is thus positioned in a fixed relationship to the LEDs 12b, 12r, 12g to receive light from the LEDs reflected by a sample 18 of printed material. Suitable detectors are available from EG&G, UK or HAMAMATSU, Japan. The housing 16 supports a printed circuit board 19, carrying the necessary electronic circuitry, connected in an appropriate manner to the LEDs and the detector. While in the illustrated embodiment, only one LED of each colour is used, it may be desirable to use two LEDs of that colour to which the detector is least sensitive (usually blue).

The housing 16 has two ski-like extending portions 24, which are orientated parallel to the web transport direction. The surfaces 20 of these ski-like extending portions 24 define a measuring plane 22 in a fixed position relative to the LED assembly and the detector 14. The surfaces 20 are formed of a low friction and long wearing material, for example of PTFE.

The reflectometer 10 is used in combination with a multi-colour digital printer 26, such as a XEIKON DCP-1 digital printer (ex Xeikon NV, Mortsel, Belgium), which is adapted to print images on a substrate 28 in the form of a web, for example of paper, fed from a supply roll 30. The substrate moves through the printer at a speed of, for example, 12 cm/sec. The reflectometer is sited following any substrate cooling device in the printer 26 and in advance of a sheet cutting device 32, from which cut sheets fall into a collection tray 33. The arrangement further includes a control device 34 which is capable of controlling the printer 26 in response to the output of the detector 14.

In use the print quality of the printed material output of the multi-colour printer 26 can be monitored by printing a number of control patches on the substrate 28 moving through the printer 26. As illustrated two rectangular control patches 36¹ and 36² having a size of, for example 8 mm in the web feed direction and 5 mm in the lateral direction are shown, spaced by un-printed areas 36³ to represent a blank control patch for each colour. The control patches should have a dimension greater than the aperture 17 of the reflectometer. A series of say 8 control patches will therefore occupy about 64 mm of substrate, and at a substrate feed rate of 120 mm/sec, the measurements can be performed in less than 1 second. The control patches can be located close to the edge of the printed material, which position usually represents the empty margin of the image being printed, or between two successive print pages. To ease the location of the reflectometer directly above the control patches, the device may be mounted on a track extending across the web path, with a motor provided to drive the device along the track.

Thereafter, the printed material output including the control patches 36¹, 36², 36³ is passed adjacent the reflectometer 10. The printed material output is constrained to the measuring plane 22 while the control patches 36¹, 36², 36³ are illuminated with light from the light source 12. The control patches 36¹, 36², 36³ are each illuminated with light of a complimentary colour to the colour of the control patch 36 from an appropriate one of the LEDs 12b, 12r, 12g. The control device 34 serves to selectively activate one or more of the LEDs 12b, 12r, 12g, in response to the colour of a control patch 36 printed by the printer 26.

The detector 14 is used to measure the light reflected by each control patch 36. The output of the detector 14 is processed to generate a mea reflectivity reading for each of the control patches 36¹, 36², 36³. The printer 26 is adjusted when the reflectivity reading falls outside a predetermined tolerance range. Predetermined tolerance ranges will vary according to personal preference. Typically the reflectivity of each primary colour at 100% coverage is 1.4, with a tolerance of ± 0.10, while the reflectivity of black images at 100% coverage is 1.8, with a tolerance of ± 0.15. The device described herein is however capable of detecting reflectivity differences of ± 0.05, even ± 0.02.

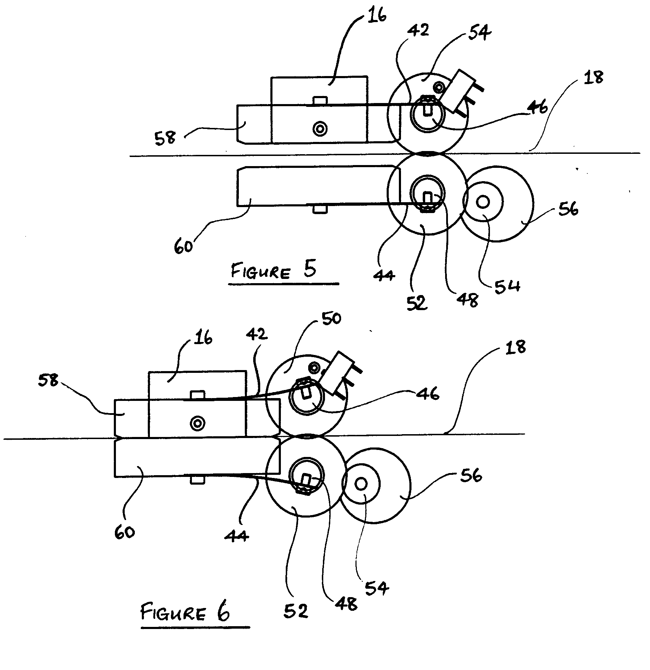

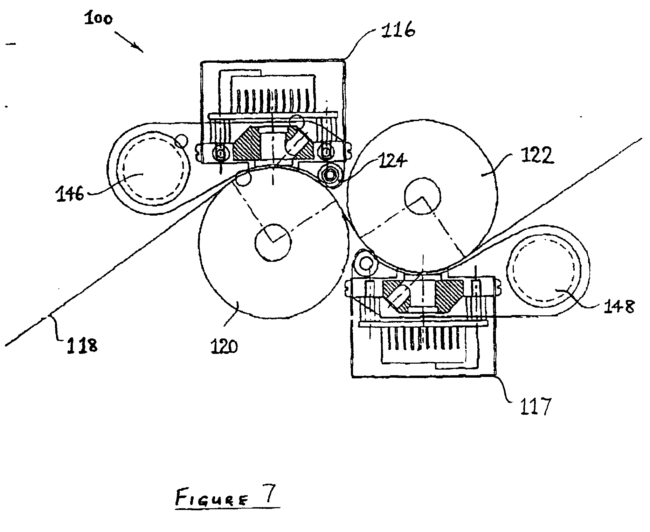

As shown in Figures 5 and 6, a positioning device 38 is provided for moving the LED assembly and the detector 14 selectively into a measuring position adjacent the sample 18, and a non-measuring position away from the sample 18. The positioning device 38 comprises a clamp device 40 having two spring arms 42, 52 carried respectively on shafts 46, 48. These shafts also carry gear wheels 50, 52 meshed together to ensure that the shafts 46, 48 move together. Gear wheel 52 also meshes with a gear wheel 54 carried on the shaft of an actuating motor 56. The spring arms 42, 52 each carry a bracket 58, 60 at its remote end. One bracket 58 carries the housing 16 of the reflectometer 10. The other bracket 60 carries a counter plate, or an equivalent measurement housing with an offset aperture. Where "duplex" measurements are to be taken, the face of the housing towards the substrate may be have a white or reflective surface. Operation of the motor 56 in one direction brings the clamp device 40 into its closed position (shown in Figure 6) corresponding to the measuring position while operation of the motor 56 in the opposite direction takes the clamp device 40 into an open position (shown in Figure 5) corresponding to the non-measuring position.

In the alterntive embodiment shown in Figure 7, the printed material 118 passes in turn over two backing rollers 120 and 122. In this embodiment the device includes two housings 116, 117 hinged at 146 and 148, to enable the housings to be moved into the operative position as shown, and into a non-operating position. Each housing carries a freely-rotating roller 124 which, in the operative position, lies in rolling contact with the substrate close to the measuring position to ensure that LEDs and the detector carried within the housing remain at a fixed distance from to the printed material. In other respects, the device 100 is similar to the device shown in the preceding Figures.

## Claims

1. A reflectometer for monitoring the print quality of printed material, comprising a light source and a detector (14) positioned in a fixed relationship to said light source to receive light from said light source reflected by the image on a sample (18) of printed material, **characterised in that** said light source comprises an assembly of light emitting diodes (12b, 12r, 12g) capable, when activated, of emitting light of different wavelength bands, and control means (34) for selectively activating one or more of said light emitting diodes (12b, 12r, 12g).

2. A reflectometer according to claim 1, wherein said assembly comprises at least three light emitting diodes (12b, 12r, 12g) with different output wavelength bands.

3. A reflectometer according to claim 1, wherein said assembly comprises at least one blue light emitting diode (12b), at least one red light emitting diode (12r) and at least one green light emitting diode (12g).

4. A reflectometer according to claim 1, in combination with a multi-colour printer (26), further including means (34) for controlling said printer (26) in response to the output of said detector (14).

5. A reflectometer according to claim 4, further comprising means (34) for activating at least one of said light emitting diodes (12b, 12r, 12g) in response to the colour of a control patch (36) printed by said printer (26).

6. A reflectometer according to claim 5, wherein said printer (26) is a digital printer (26).

7. A reflectometer according to claim 1, further comprising means (20) to define a measuring plane (22) in a fixed position relative to said light emitting diodes (12b, 12r, 12g) and said detector (14).

8. A reflectometer according to claim 7, wherein said light emitting diodes (12b, 12r, 12g) and said detector (14) are mounted in a housing (16), said housing (16) having surface portions (20) defining said measuring plane (22).

9. A reflectometer according to claim 8, wherein said surface portions (20) are formed from a low friction material.

10. A reflectometer according to claim 8, wherein a positioning device (38) is provided for moving said housing including said light emitting diodes (12b, 12r, 12g) and said detector (14) selectively into a measuring position adjacent said sample (18), and a non-measuring position away from said sample (18).

11. A reflectometer according to claim 10, wherein said positioning device (38) comprises a clamp device (40) having a closed position corresponding to said measuring position and an open position corresponding to said non-measuring position.

12. A method for monitoring the print quality of printed material output from a multi-colour printer (26), comprising the steps of:
(1) printing a control patch (36) on a substrate (28) moving through said printer (26);
(2) subsequently placing printed material output including said control patch (36) adjacent a reflectometer comprising a light source and a detector (14);
(3) illuminating said control patch (36) with light from said light source and using said detector (14) to measure the light reflected by said control patch;
**characterised in that** said control patch (36) is illuminated with light of a complimentary colour to the colour of said control patch (36) from one or more light emitting diodes (12b, 12r, 12g) located in a fixed position relative to said detector (14).

13. A method according to claim 12, further comprising constraining said printed material output including said control patch (36) to a measuring plane (22) while light reflected from said control patch (36) is detected.

14. A method according to claim 12, further comprising processing the output of said detector (14) to generate a reflectivity reading for said control patch, and causing said printer (26) to be adjusted when said reflectivity reading falls outside a predetermined tolerance range.

15. A method according to claim 14, wherein said reflectivity reading is generated by processing the output of said detector (14) for a plurality of control patches (36¹, 36², 36³).

16. A method according to claim 15, further comprising processing the output of said detector (14) for at least one blank control patch (36³) for each light emitting diode output wavelength band.

17. A method according to claim 15 or 16, further comprising processing the output of said detector (14) when none of said light emitting diodes is activated.

18. A method according to claim 12, wherein step (3) takes place while said printed material is moving relative to said reflectometer.

19. A method according to claim 12, wherein said substrate is in the form of a web which is subsequently cut into sheets.
